# EUROPEAN PATENT SPECIFICATION

(11) **EP 3 002 192 B1**
(45) Date of publication and mention of the grant of the patent: **19.07.2017**
(21) Application number: 15185100.3
(22) Date of filing: 14.09.2015
(51) Int. Cl.: B62J 35/00, B62J 17/00

(54) **STRADDLED VEHICLE**
FAHRZEUG MIT SATTEL
VÉHICULE À CALIFOURCHON

(30) Priority: 01.10.2014 JP 2014202782
(43) Date of publication of application: 06.04.2016
(73) Proprietor: Yamaha Hatsudoki Kabushiki Kaisha, Shizuoka-ken Shizuoka 438-8501 (JP)
(72) Inventor: Miyamoto, Masatoshi, Shizuoka, Shizuoka 438-8501 (JP); Iida, Kazuya, Shizuoka, Shizuoka 438-8501 (JP); Suzuki, Takaharu, Shizuoka, Shizuoka 438-8501 (JP); Yamauchi, Yoshinori, Shizuoka, Shizuoka 438-8501 (JP)
(74) Representative: Moreland, David

(56) References cited:
- EP-A1- 1 790 747
- EP-A1- 2 719 613
- EP-A2- 1 659 054
- EP-A2- 1 808 595
- CN-A- 103 213 636
- US-A1- 2007 200 332
- US-A1- 2011 204 613

## Description

### FIELD OF INVENTION

The present invention relates to a straddled vehicle, or straddle-type vehicle or saddle-ride vehicle and more particularly to a straddled vehicle provided with a cover at a front part of a fuel tank.

### BACKGROUND OF INVENTION

A motorcycle is an example of a straddled vehicle. The motorcycle has a fuel tank. The fuel tank is sometimes provided with exterior parts for decorative purposes.

For example, JP 2007-62495 A discloses a motorcycle having a tank cover provided at a front part of a fuel tank. In the disclosure, a claw member is formed at an inner surface of an upper wall of the tank cover. A positioning piece is formed at a front end surface of the tank main body. The claw member is combined with the positioning piece, so that the tank cover is prevented from moving in up-down, left-right, and backward directions. In the disclosed motorcycle, the upper surface of the tank main body is recessed. Therefore, while the tank cover is attached to the front side part of the fuel tank, a step hardly forms at a boundary between the upper surface of the tank main body and the upper surface of the tank cover.

In recent years, ways to reduce the weight of vehicle bodies have been studied in the field of motorcycles. One possibility is to employ aluminum alloy fuel tanks.

An aluminum alloy sheet material however has lower moldability in press-molding than a steel sheet material. Therefore, it is difficult to form a sufficient recess at the tank to attach a stay for securing the tank and the cover. As a result, a step is easily formed at a boundary between the surface of the cover and the surface of the tank, which can ruin the finish of the motorcycle.

An object of the present invention is to improve the attachment of a cover made of synthetic resin to a fuel tank made of an aluminum alloy, e.g. to provide an improved appearance or finish.

It is an object of at least one embodiment of at least one aspect of the present invention to obviate or at least mitigate one or more problems or disadvantages in the prior art.

US Patent Application Publication 2007/0200332 A1 "Saddle-type vehicle", Muroo et al. describes a straddled vehicle, on which the preamble of present claim 1 is based, that securely supports a fuel tank with sufficient strength when load in a vertical direction is applied. A pair of frame members extend in a front-and-rear direction of the vehicle and support a fuel tank. The fuel tank has a pair of flanges contacting the outer sides of the frame members. The flanges are attached to the frame members by attachment members inserted from outside in a vehicle width direction.

### SUMMARY OF INVENTION

Various aspects of the present invention are defined in the independent claims. Some preferred features are defined in the dependent claims.

According to a first aspect of the invention is a straddled vehicle. The straddled vehicle comprises
a fuel tank made of aluminum or an aluminum alloy;
a top cover provided or extending ahead or forwardly of the fuel tank and made of synthetic resin; and
a connection member provided to connect the fuel tank and the top cover,
a front part of the fuel tank having an overlapping surface formed inwardly of a surface of a part of the fuel tank positioned behind the front part in an up-down direction and/or a left/right direction of the vehicle,
a rear part of the top cover being placed on, adjacent or proximate the overlapping surface, the connection member being sheet-shaped or planar and provided between the front part of the fuel tank and the rear part of the top cover to connect the front part of the fuel tank and the rear part of the top cover wherein the rear part of the top cover overlaps the front part of the fuel tank, and the connection member adheres to the overlapping surface.

In the straddled vehicle described above, while the rear part of the top cover may be placed on the overlapping surface of the front part of the fuel tank, the connection member may connect the front part of the fuel tank and the rear part of the top cover. Therefore, a step may hardly be formed at a boundary between the top cover and the fuel tank.

The connection member may include first and second connection members. The first connection member may be provided at the front part of the fuel tank, and may have a sheet shape. The second connection member may be provided in a position opposed to the first connection member at the rear part of the top cover, and may have a sheet shape. The first connection member and the second connection member may be detached/attached from/to each other.

The top cover may be detached/attached from/to the fuel tank.

The straddled vehicle according to the first or second aspect, the overlapping surface may have a recess that stores the connection member.

As such, the overlapping surface may be closer to a surface of the fuel tank (e.g. a surface of a part positioned behind the front part to be specific) than would be the case without such a recess. This may reduce the processing workload necessary to form the overlapping surface at the fuel tank.

The fuel tank may include first and second panels. The first panel may include the overlapping surface. The second panel may be provided under, e.g. beneath or directly under, the first panel, and may be welded or fixed to the first panel. The front end of the second panel may be positioned ahead of a front end of the first panel. The front end of the first panel may be welded or fixed to the second panel.

As such, a weld bead formed when the first panel is welded to the second panel may be received by the second panel.

The front end of the first panel may be welded or fixed to the second panel on an inside of the overlapping surface in one of an up-down direction and a left-right direction of the vehicle.

As such, a weld bead formed when the first panel is welded to the second panel may hardly contact the top cover.

The connection member may comprise a hook and loop fastener. One of the first or second connection members may comprise a raised hook surface. The other of the first or second connection members may comprise a raised loop surface. The connection member may be or comprise an adhesive tape. The connection member may not be or comprise a bolt or other threaded fixing member.

The front part of the fuel tank may comprise an upper or upmost sheet. The front part of the fuel tank may comprise at least one, e.g. a pair of or two or more, side sheets.

The front part of the fuel tank may comprise a support member. The support member may be positioned or extend ahead or forwardly of the upper or upmost sheet of the front part in a plan view

The support member may comprise at least one receiving means, such as a hole and/or a notch. The at least one receiving means may be arranged on a central axis line that extends in a front-back direction of the fuel tank through a centre of the fuel tank in the left-right direction. The top cover may comprise one or more, e.g. two, projections, which may be arranged on a central axis line that extends in the front-back direction of the top cover through the centre of the top cover in the left-right direction. The at least one projection may be positioned in the at least one receiving means.

The recess and/or connection member may be provided in the upper or upmost sheet. The recess may comprise two or more, e.g. at least a pair of, recesses. The recesses may be in symmetry with respect to the central axis line. The straddled vehicle may comprise a plurality of, e.g. at least a pair of, connection members. Respective connection members may be provided in respective recesses.

The first connection member may be adhered to a surface of a corresponding recess. The connection members may be provided in symmetry with respect to the central axis line. The second connection member may be adhered to a lower surface of the rear part of the top cover, e.g. to a lower surface of the part overlapping the front part of the fuel tank in a plan view.

The top cover may comprise at least a front part and a rear part. The top cover, e.g. the rear part of the top cover, may comprise an upper sheet and a pair of side sheets. The side sheets may extend downward from the left and right ends of the upper sheet.

The top cover, e.g. at least one or both of the side sheets of the top cover, may comprise an attachment member, which may be registered with a corresponding attachment member formed at the fuel tank. The side sheets may thereby be secured to the fuel tank. The side sheet of the top cover may be secured to the side sheet of the fuel tank by a fixing member, e.g. a bolt. The fixing member may engage with the attachment member of the top cover and/or the attachment member of the fuel tank.

According to an aspect of the present invention is a fuel tank for a straddled vehicle. The fuel tank may be made of or comprise aluminum and/or an aluminum alloy. The fuel tank may be provided with a connection member, such as a first connection member. The connection member may be sheet-shaped or planar. A front part of the fuel tank may have an overlapping surface, which may be formed inwardly of, or on an inside of, a surface of a part of the fuel tank positioned behind or rearward of the front part, e.g. in the up-down and/or left-right direction of the vehicle. The connection member may be arranged to connect between the front part of the fuel tank and a rear part of a top cover that is providable forwardly or of ahead of the fuel tank.

According to an aspect of the present invention is a top cover for a straddled-vehicle. The top cover may be configured to be mounted to the straddled-vehicle such that it is provided or extends ahead or forwardly of a fuel tank of the straddled-vehicle. The top cover may be made of or comprise synthetic resin. The top cover may comprise a rear part, which may be arranged to be placed on, adjacent or proximate an overlapping surface on a front part of the fuel tank. The top cover may comprise a connection member, such as a second connection member. The connection member may be or comprise a sheet-shaped or planar connection member. The connection member may be arranged to connect between the front part of the fuel tank and the rear part of a top cover.

### BRIEF DESCRIPTION OF DRAWINGS

An embodiment of the present invention will now be described, by way of example only, with reference to the accompanying drawings, which are:
- **Figure 1**: a left side view of a motorcycle according to an embodiment of the present invention.
- **Figure 2**: a plan view of a fuel tank;
- **Figure 3**: a front view of the fuel tank;
- **Figure 4**: a left side view of the fuel tank;
- **Figure 5**: a sectional view of the fuel tank taken along line V-V in Figure 3;
- **Figure 6**: a plan view of a top cover;
- **Figure 7**: a left side view of the top cover;
- **Figure 8**: a plan view of the fuel tank provided with the top cover;
- **Figure 9**: a left side view of the fuel tank provided with the top cover;
- **Figure 10**: a sectional view showing a positioning arrangement between the top cover and the fuel tank;
- **Figure 11**: a sectional view showing how the top cover and the fuel tank are connected by a connection member;
- **Figure 12**: a sectional view showing an application example of the connection between the top cover and the fuel tank; and
- **Figure 13**: a sectional view showing another application example of the connection between the top cover and the fuel tank.

### DESCRIPTION OF THE EMBODIMENTS

A straddled vehicle according to an embodiment of the invention will be described in conjunction with the accompanying drawings. In the following description of the embodiment, a sports type motorcycle will be described as an example of the straddled vehicle. In the drawings, the same or corresponding portions are designated by the same reference characters, and their description will not be repeated.

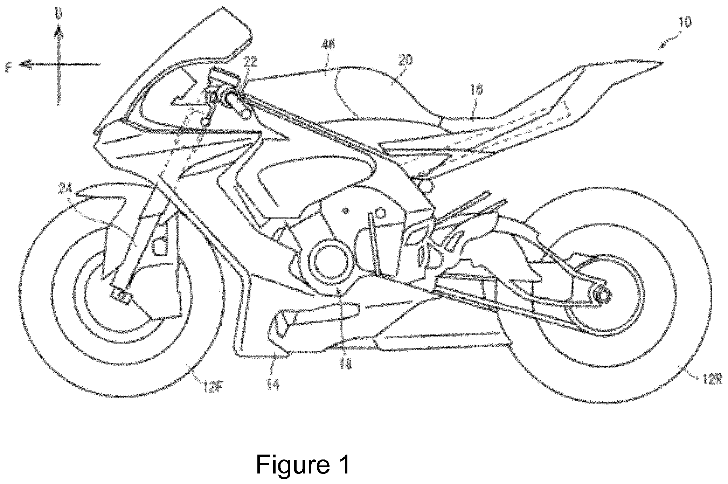

Figure 1 is a left side view of a motorcycle 10 according to the embodiment of the present invention. Note that in the following description, the front, rear, left, and right refer to these positions as viewed from the rider seated on a seat 16 of the motorcycle 10. In Figure 1, the arrow F indicates a forward direction of the motorcycle 10 and the arrow U indicates an upward direction of the motorcycle 10.

As shown in Figure 1, the motorcycle 10 includes a front wheel 12F, a rear wheel 12R, a vehicle body cover 14, the seat 16, an engine unit 18, a fuel tank 20, a handle 22, and a front fork 24.

The front fork 24 supports the front wheel 12F in a rotatable manner. The direction of the front wheel 12F is changed by operating the handle 22.

The vehicle body cover 14 covers a vehicle body frame. The engine unit 18 is attached to the vehicle body frame.

The rear wheel 12R is provided behind the engine unit 18. Motive power from the engine unit 18 is transmitted to the rear wheel 12R and the rear wheel 12R rotates.

The fuel tank 20 is provided above the engine unit 18. The seat 16 is provided behind the fuel tank 20.

A top cover 46 is provided ahead of the fuel tank 20. The top cover 46 covers for example an air cleaner.

### Fuel Tank

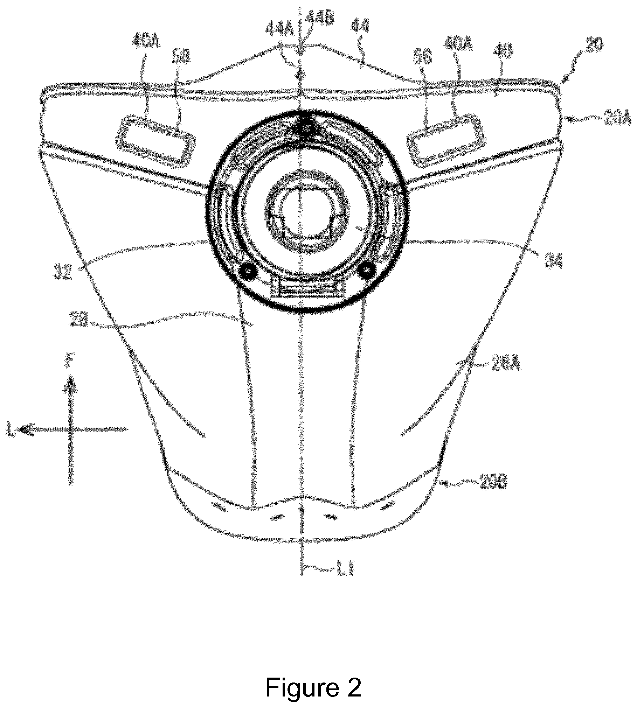

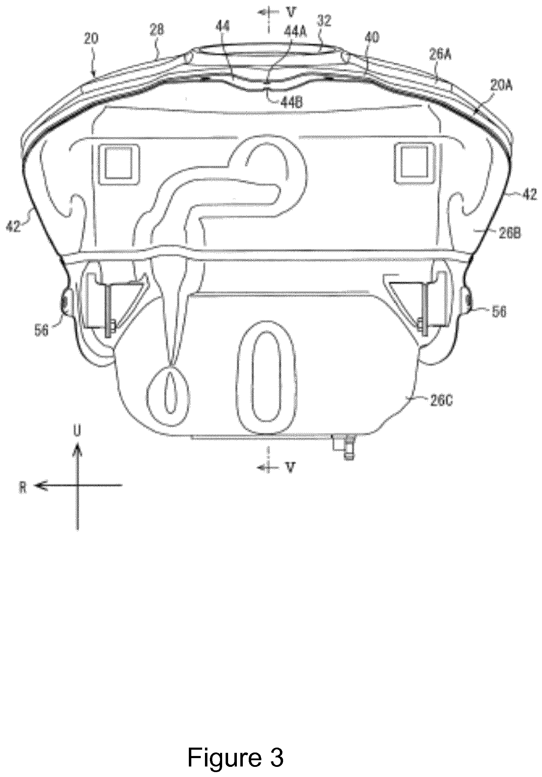

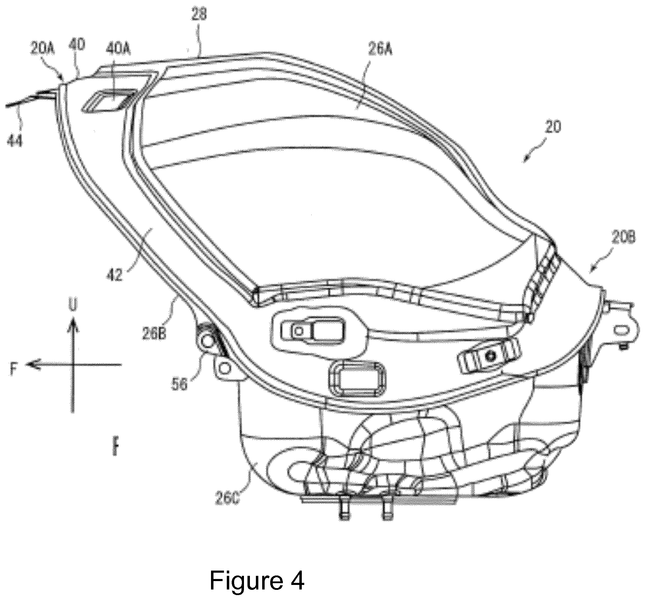

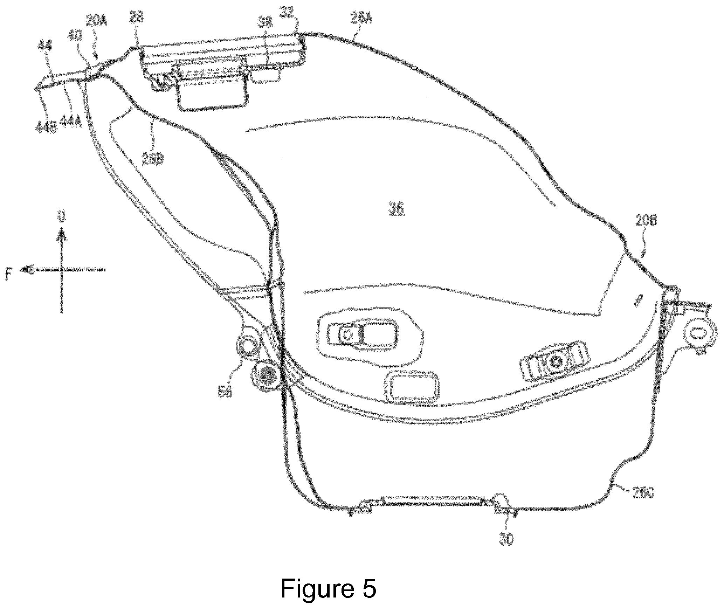

Referring to Figures 2 to 5, the fuel tank 20 will be described. Figure 2 is a plan view of the fuel tank 20. Figure 3 is a front view or the fuel tank 20. Figure 4 is a left side view of the fuel tank 20. Figure 5 is a sectional view of the fuel tank 20. In Figure 2, the arrow F indicates the forward direction of the motorcycle 10, and the arrow L indicates a leftward direction of the motorcycle 10. In Figure 3, the arrow U indicates the upward direction of the motorcycle 10 and the arrow R indicates a rightward direction of the motorcycle 10. In Figures 4 and 5, the arrow F indicates the forward direction of the motorcycle 10, and the arrow U indicates the upward direction of the motorcycle 10.

As shown in Figure 2, the fuel tank 20 includes a front part 20A and a rear part 20B. The front part 20A is positioned ahead of the rear part 20B. The width of the front part 20A in the left-right direction is larger than the width of the rear part 20B in the left-right direction.

The front part 20A is the foremost part of the tank when, for example, the fuel tank 20 is equally divided into three in the front-back direction. The front part 20A includes at least a part of a front end of the fuel tank 20 in a plan view. The front part 20A needs only include the largest width part of the fuel tank 20 in the left-right direction. The rear part 20B is the rearmost part of the tank when for example the fuel tank 20 is equally divided into three in the front-back direction of the fuel tank 20. The rear part 20B includes for example at least a part of the rear end of the fuel tank 20 in a plan view. The rear part 20B needs only include a part smaller than the width of the front part 20A in the left-right direction.

As shown in Figure 5, the fuel tank 20 includes a tank panel 26A, a tank panel 26B, and a tank panel 26C. The tank panel 26A, the tank panel 26B, and the tank panel 26C are all made of an aluminum alloy.

The tank panel 26A includes an upper surface 28 of the fuel tank 20. The tank panel 26A has an opening 32. The opening 32 has a support member 38. The support member 38 supports a lid 34 (see Figure 2) of the fuel tank 20.

The tank panel 26B and the tank panel 26C are provided under the tank panel 26A. The tank panel 26B is provided ahead of and above the tank panel 26C. The tank panel 26B is welded to the tank panel 26C. A base 30 is provided at the bottom of the tank panel 26C. A pump is attached to the base 30. The pump feeds fuel to an injector. More specifically, the motorcycle 10 includes a fuel injection system. The tank panel 26B and the tank panel 26C are welded to the tank panel 26A. In this way, a space 36 capable of storing fuel is formed in the fuel tank 20.

As shown in Figure 3, the front part 20A includes an upper sheet 40 and a pair of side sheets 42. The upper sheet 40 and the pair of side sheets 42 are included in the tank panel 26A. The side sheets 42 extend downward from the left and right ends of the upper sheet 40. The distance between the side sheets 42 is shorter on the lower end of the front part 20A than on the upper end. In other words, the side sheets 42 are inclined from the outside to the inside in the left-right direction of the vehicle. Stated differently, each of the side sheets 42 forms an inclined part.

As shown in Figure 2, the front part 20A includes a support member 44. The support member 44 is positioned ahead of the upper sheet 40 in a plan view.

The support member 44 has a hole 44A and a notch 44B. The hole 44A and the notch 44B are arranged on a central axis line L1. The central axis line L1 extends in the front-back direction of the fuel tank 20 through a center of the fuel tank 20 in the left-right direction.

As shown in Figure 2, the upper sheet 40 has a pair of recesses 40A. The recesses 40A are in symmetry with respect to the central axis line L1.

### Top Cover

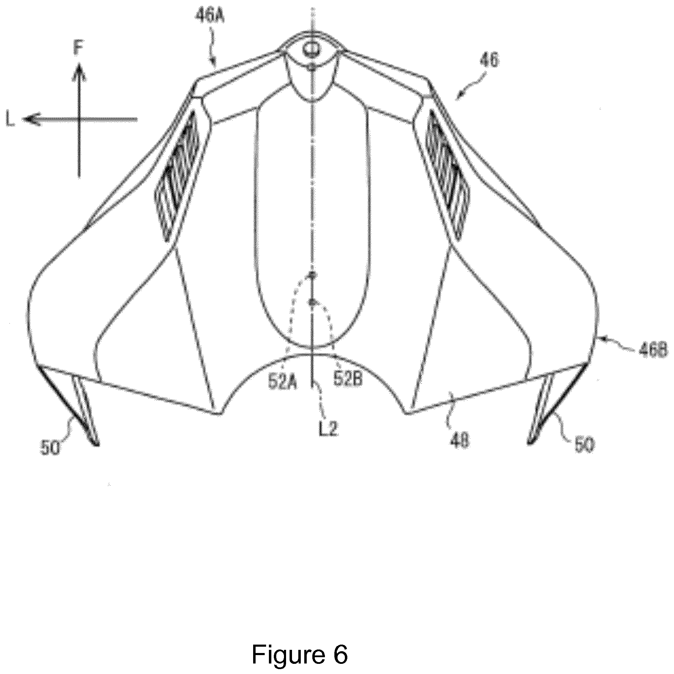

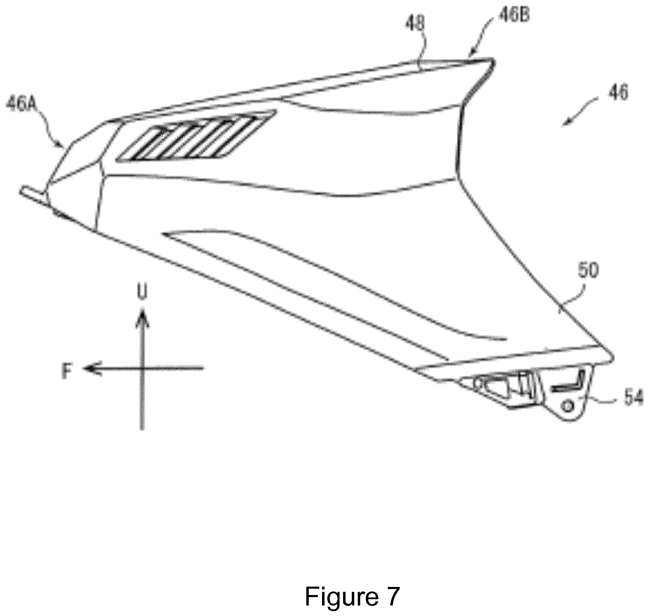

Referring to Figures 6 and 7, the top cover 46 will be described. Figure 6 is a plan view of the top cover 46. Figure 7 is a left side view of the top cover 46. In Figure 6, the arrow F indicates the forward direction of the motorcycle 10, the arrow L indicates the leftward direction of the motorcycle 10. In Figure 7, the arrow F indicates the forward direction of the motorcycle 10, and the arrow U indicates the upward direction of the motorcycle 10.

The top cover 46 is made of synthetic resin. As shown in Figure 6, the top cover 46 includes a front part 46A and a rear part 46B. The front part 46A is positioned ahead of the rear part 46B. The width of the front part 46A in the left-right direction is shorter than the width of the rear part 46B in the left-right direction.

The front part 46A is the foremost part when for example the top cover 46 is equally divided into three in the front-back direction. The front part 46A includes for example at least a part of the front end of the top cover 46 in a plan view. The rear part 46B is the rearmost part when for example the top cover 46 is equally divided into three parts in the front-back direction of the vehicle. The rear part 46B includes for example at least a part of the rear end of the top cover 46 in a plan view. The rear part 46B needs only include the largest width part of the top cover 46 in the left-right direction.

As shown in Figure 6, the rear part 46B includes an upper sheet 48 and a pair of side sheets 50. The side sheets 50 extend downward from the left and right ends of the upper sheet 48. The distance between the side sheets 50 is shorter on the lower end of the rear part 46B than on the upper end. More specifically, the side sheets 50 are inclined from the outside to the inside in the left-right direction of the vehicle. Stated differently, each of the side sheets 50 forms an inclined part.

As shown in Figure 6, the top cover 46 includes two projections 52A and 52B. The two projections 52A and 52B are arranged on a central axis line L2 that extends in the front-back direction of the top cover 46 through the center of the top cover 46 in the left-right direction.

### Attachment of Top Cover to Fuel Tank

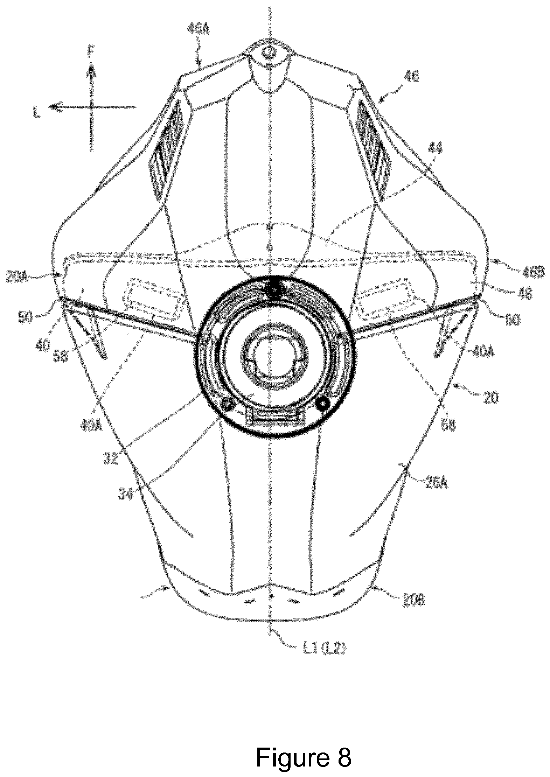

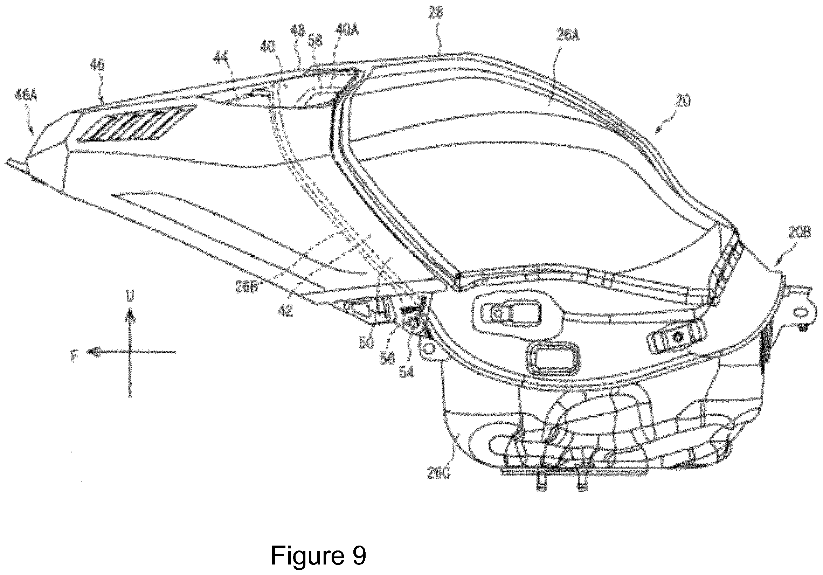

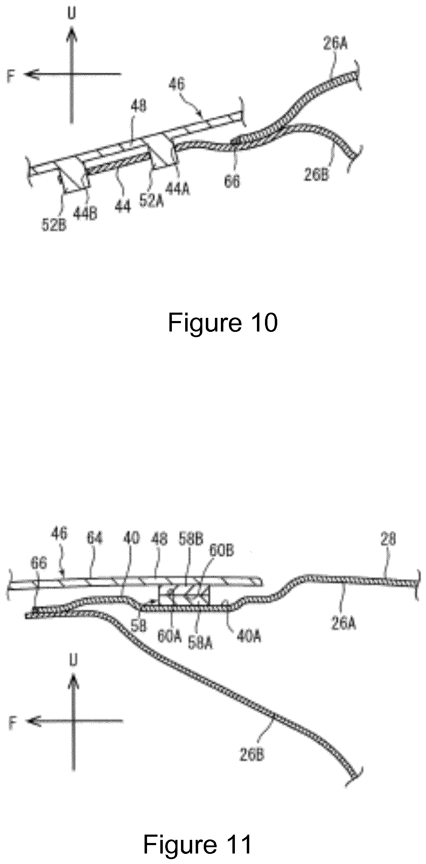

Referring to Figures 8 to 11, how the top cover 46 is attached to the fuel tank 20 will be described. Figure 8 is a plan view of the fuel tank 20 provided with the top over 46. Figure 9 is a left side view of the fuel tank 20 provided with the top cover 46. Figure 10 is a sectional view showing a positioning arrangement between the top cover 46 and the fuel tank 20. Figure 11 is a sectional view of how the top cover 46 and the fuel tank 20 are connected. In Figure 8, the arrow F indicates the forward direction of the motorcycle 10, and the arrow L indicates the leftward direction of the motorcycle 10. In Figures 9 to 11, the arrow F indicates the forward direction of the motorcycle 10, and the arrow U indicates the upward direction of the motorcycle 10.

As shown in Figures 8 and 9, the rear part 46B of the top cover 46 overlaps the front part 20A of the fuel tank 20. More specifically, as shown in Figure 8, the upper sheet 48 in the top cover 46 overlaps the upper sheet 40 in the fuel tank 20 in a plan view of the vehicle. As shown in Figure 9, the side sheet 50 in the top cover 46 overlaps the side sheet 42 in the fuel tank 20 in a side view of the vehicle.

As shown in Figure 9, the attachment member 54 formed at the top cover 46 is registered with the attachment member 56 formed at the fuel tank 20. In this state, the side sheet 50 of the top cover 46 is secured to the side sheet 42 of the fuel tank 20 by a bolt.

As shown in Figure 10, the projection 52A is positioned in the hole 44A. The projection 52B is positioned in the notch 44B. In this way, the top cover 46 is positioned with respect to the fuel tank 20.

As shown in Figure 11, the rear part 46B of the top cover 46 is connected to the front part 20A of the fuel tank 20 by a connection member 58. The connection member 58 includes a first connection member 58A and a second connection member 58B.

The first connection member 58A is sheet-shaped. The first connection member 58A is provided in the recess 40A. The first connection member 58A is adhered to a bottom surface of the recess 40A. More specifically, the connection member 58 is provided in symmetry with respect to the central axis line L1.

The second connection member 58B is sheet-shaped. The second connection member 58B is adhered to a lower surface of the rear part 46B of the top cover 46, more specifically to a lower surface of the part overlapping the front part 20A of the fuel tank 20 in a plan view.

The connection member 58 is for example a hook and loop fastener. In this case, the first connection member 58A includes for example a raised hook surface 60A. The second connection member 58B includes for example a raised loop surface 60B. The surface 60A of the first connection member 58A and the surface 60B of the second connection member 58B are placed on each other, so that the first and second connection members 58A and 58B are connected. If the connection member 58 is a hook and loop fastener, the first and second connection members 58A and 58B are detachable.

As shown in Figure 11, the surface of the upper sheet 40 of the fuel tank 20 or the surface that overlaps the rear part 46B of the top cover 46 is positioned below the upper surface 28 of the fuel tank 20. The first connection member 58A is provided in the recess 40A. Therefore, the upper surface 64 of the top cover 46 is substantially in the same level as the upper surface 28 of the fuel tank 20 in the up-down direction.

According to the embodiment in particular, the surface of the upper sheet 40 does not have to be arranged overly lower than the upper surface 28 in the tank 20 because of the recess 40A. Therefore, the workload necessary for forming the upper sheet 40 in the fuel tank 20 can be reduced.

As shown in Figure 11, the front end of the tank panel 26A is welded to the tank panel 26B in a lower level than the surface of the upper sheet 40. In this way, the weld bead 66 can be prevented from contacting the top cover 46.

As shown in Figure 11, the front end of the tank panel 26A is positioned behind the front end of the tank panel 26B. Therefore, the weld bead 66 can be received at the tank panel 26B.

In the motorcycle 10, the top cover 46 made of synthetic resin is produced using a die. The part of the die used to form the top cover 46 corresponding to the inside of the pair of side sheets 50 must be movable toward/apart from the pair of side sheets 50. As a result, it is hard to provide a member used to connect the rear part 46B of the top cover 46 and the front part 20A of the fuel tank 20 at the part of the top cover 46 (the upper sheet 48) that overlaps the front part 20A of the fuel tank 20 in a plan view.

Here, in the motorcycle 10, the sheet-shaped connection member 58 is provided between the rear part 46B of the top cover 46 and the front part 20A of the fuel tank 20 and connects these parts. The operation is simplified as compared to the operation of securing the upper sheet 48 of the top cover 46 and the upper sheet 40 of the fuel tank 20 by a bolt. Now, this point will be described more in detail.

When the part of the rear part 46B of the top cover 46 (upper sheet 48) that overlaps the front part 20A of the fuel tank 20 in a plan view and the front part 20A of the fuel tank 20 (upper sheet 40 to be specific) are secured by a bolt, a bolt and a nut would be used. Therefore, unless the top cover 46 is transparent, the operation cannot be carried out looking at the position of the bolt and the nut. On the other hand, using the connection member 58, the upper sheet 48 of the top cover 46 and the upper sheet 40 of the fuel tank 20 can be connected simply by pressing the upper sheet 48 of the top cover 46 against the upper sheet 40 of the fuel tank 20. Therefore, the operation can be simplified as compared to the operation of securing the upper sheet 48 of the top cover 46 and the upper sheet 40 of the fuel tank 20 by a bolt.

According to the embodiment in particular, the two connection members 58 are provided in symmetry with respect to the central axis line L1. Therefore, the upper sheet 48 of the top cover 46 and the upper sheet 40 of the fuel tank 20 can be connected in a stable manner.

### Application Examples of Connection by Connection Members

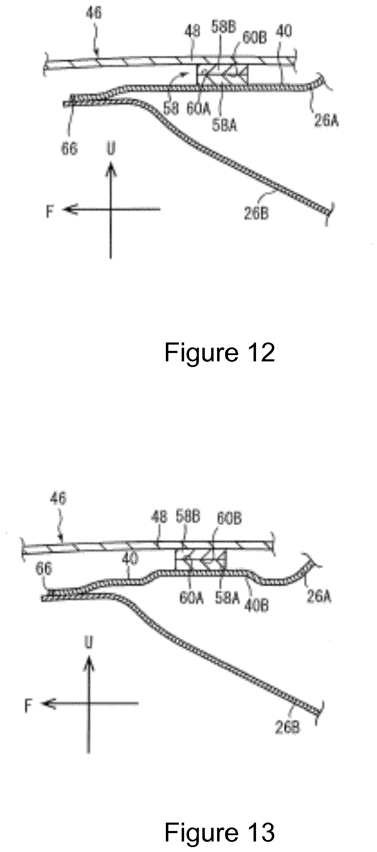

For example, as shown in Figure 12, the fuel tank 20 does not have to have the recesses 40A. In this example, the first connection member 58A is adhered to the surface of the upper sheet 40.

For example as shown in Figure 13, the fuel tank 20 may include a raised part 40B instead of the recess 40A. In this example, the first connection member 58A is adhered to an upper surface of the raised part 40B. In the application example shown in Figure 13, when rainwater gets in between the part of the rear part 46B of the top cover 46 that overlaps the front part 20A of the fuel tank 20 and the front part 20A of the fuel tank 20 in a plan view, the rainwater hardly stays in a region where the first connection member 58A is provided as compared to the arrangement in which the first connection member 58A is provided in the recess 40A. As a result, the adhesion state of the first connection member 58A can be stable.

The embodiment of the present invention has been described but the same is only exemplary illustration of how the present invention is carried out. Therefore, the invention is not limited by the description of the embodiments and modifications may be made to the above-described embodiments without departing the scope of the invention.

In the above description of the embodiment, the connection member is a hook and loop fastener but the connection member may be for example a double-side tape.

It will be appreciated that the term straddled vehicle or motor vehicle used herein, and as used in the art, is meant to include the following terms also used in the art:
straddle-type vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A straddled vehicle, (10) comprising:
a fuel tank (20)
a top cover (46) provided or extending ahead or forwardly of the fuel tank (20) and made of synthetic resin; and
a connection member (58) provided to connect the fuel tank (20) and the top cover (46),
a front part (20A) of the fuel tank (20) having an overlapping surface formed inwardly of a surface of a part of the fuel tank (20) positioned behind the front part (20A) in an up-down direction and/or a left/right direction of the vehicle,
a rear part (46B) of the top cover (46) being placed on, adjacent or proximate the overlapping surface,
the connection member (58) being sheet-shaped or planar and provided between the front part (20A) of the fuel tank (20) and the rear part (46B) of the top cover (46) to connect the front part (20A) of the fuel tank (20) and the rear part (46B) of the top cover (46)
wherein the rear part (46B) of the top cover (46) overlaps the front part (20A) of the fuel tank (20), and **characterised in that**
the fuel tank (20) is made of aluminium or an aluminium alloy and the connection member adheres to the overlapping surface.

2. The straddled vehicle (10) according to claim 1, wherein the connection member (58) comprises:
a first connection member (58A) provided at the front part (20A) of the fuel tank (20) and having a sheet shape or planar; and
a second connection member (58B) provided in a position opposed to the first connection member (58A) at the rear part (46B) of the top cover (46) and having a sheet shape or planar, and
the first connection member (58A) and the second connection member (58B) can be detached/attached from/to each other.

3. The straddled vehicle (10) according to claim 1 or 2, wherein the overlapping surface has a recess (40A) that stores or receives the connection member (58).

4. The straddled vehicle (10) according to any one of claims 1 to 3, wherein the fuel tank (20) comprises a first panel (26A) including the overlapping surface and a second panel (26B) provided under the first panel (26A) and welded to the first panel (26A),
a front end of the second panel (26B) is positioned ahead of a front end of the first panel (26A), and
the front end of the first panel (26A) is welded to the second panel (26B).

5. The straddled vehicle (10) according to claim 4, wherein the front end of the first panel (26A) is welded to the second panel (26B) on an inside of the overlapping surface.

6. The straddled vehicle (10) according to any preceding claim, wherein the connection member (58) does not comprise a bolt or other threaded fixing member.

7. The straddled vehicle (10) according to claim 2 or any claim dependent thereon, wherein the connection member (58) comprise a hook and loop fastener, one of the first or second connection members (58A, 58B) comprises a raised hook surface and the other of the first or second connection members (58A, 58B) comprises a raised loop surface.

8. The straddled vehicle (10) according to any preceding claim, wherein the front part (20A) of the fuel tank (20) comprises an upper or upmost sheet (40) and at least two side sheets (42).

9. The straddled vehicle (10) according to claim 8, wherein the front part (20A) of the fuel tank (20) comprises a support member (38), the support member (38) being positioned or extending ahead or forwardly of the upper or upmost sheet (40) of the front part (20A) in a plan view.

10. The straddled vehicle (10) according to claim 9, wherein the support member comprises at least one receiving means (44A, 44B) and the top cover (46) comprises one or more projections (52A, 52B) positioned in the at least one receiving means (44A, 44B).

11. The straddled vehicle (10) according to claim 3 or any claim dependent thereon, comprising at least a pair of recesses (40A) and at least a pair of connection members (58), wherein the recesses (40A) are arranged in symmetry with respect to a central axis line (L1) that extends in a front-back direction of the fuel tank (20) through a centre of the fuel tank (20) in the left-right direction, and respective connection members (58) are provided in respective recesses (40A).

12. The straddled vehicle (10) according to any preceding claim, wherein the top cover (46) comprises an upper sheet (48) and a pair of side sheets (50) that extend downward from the left and right ends of the upper sheet (48), and at least one or both of the side sheets (50) of the top cover (46) comprise an attachment member (54) registered with a corresponding attachment member (56) formed at the fuel tank (20) to thereby secure the side sheets (50) to the fuel tank (20).

## Patentansprüche

1. Grätschsitzfahrzeug (10), das umfasst:
einen Kraftstoffbehälter (20)
eine vor dem Kraftstoffbehälter (20) bereitgestellte oder sich von diesem aus nach vorn erstreckende und aus Kunstharz hergestellte Oberseitenabdeckung (46); und
ein Verbindungselement (58), das bereitgestellt wird, um den Kraftstoffbehälter (20) und die Oberseitenabdeckung (46) zu verbinden,
wobei ein Frontteil (20A) des Kraftstoffbehälters (20) eine von einer Oberfläche eines Teils des Kraftstoffbehälters (20) einwärts gebildete, hinter dem Frontteil (20A) in einer Aufwärts-Abwärts-Richtung und/oder einer Links/Rechts-Richtung des Fahrzeugs positionierte Überlappungsfläche aufweist,
wobei ein Rückteil (46B) der Oberseitenabdeckung (46) auf der, angrenzend an die oder nahe der Überlappungsfläche platziert ist,
wobei das Verbindungselement (58) blechförmig oder eben ist und zwischen dem Frontteil (20A) des Kraftstoffbehälters (20) und dem Rückteil (46B) der Oberseitenabdeckung (46) bereitgestellt ist, um den Frontteil (20A) des Kraftstoffbehälters (20) und den Rückteil (46B) der Oberseitenabdeckung (46) zu verbinden
wobei der Rückteil (46B) der Oberseitenabdeckung (46) den Frontteil (20A) des Kraftstoffbehälters (20) überlappt, und
**dadurch gekennzeichnet, dass**
der Kraftstoffbehälter (20) aus Aluminium oder einer Aluminiumlegierung hergestellt wird und
das Verbindungselement an der Überlappungsfläche klebt.

2. Grätschsitzfahrzeug (10) nach Anspruch 1, wobei das Verbindungselement (58) umfasst:
ein erstes Verbindungselement (58A), das an dem Frontteil (20A) des Kraftstoffbehälters (20) bereitgestellt ist und eine Blechform hat oder eben ist; und
ein zweites Verbindungselement (58B), das in einer Position gegenüber dem ersten Verbindungselement (58A) an dem Rückteil (46B) der Oberseitenabdeckung (46) bereitgestellt ist und eine Blechform hat oder eben ist, und
wobei das erste Verbindungselement (58A) und das zweite Verbindungselement (58B) voneinander/miteinander getrennt/verbunden werden können.

3. Grätschsitzfahrzeug (10) nach Anspruch 1 oder 2, wobei die Überlappungsfläche eine Aussparung (40A) aufweist, die das Verbindungselement (58) lagert oder aufnimmt.

4. Grätschsitzfahrzeug (10) nach einem der Ansprüche 1 bis 3, wobei der Kraftstoffbehälter (20) eine erste Verkleidung (26A), die die Überlappungsfläche einschließt, und eine zweite Verkleidung (26B) umfasst, die unter der ersten Verkleidung (26A) bereitgestellt und an die erste Verkleidung (26A) angeschweißt ist,
wobei ein Frontende der zweiten Verkleidung (26B) vor einem Frontende der ersten Verkleidung (26A) positioniert ist, und
wobei das Frontende der ersten Verkleidung (26A) an die zweite Verkleidung (26B) angeschweißt ist.

5. Grätschsitzfahrzeug (10) nach Anspruch 4, wobei das Frontende der ersten Verkleidung (26A) auf einer Innenseite der Überlappungsfläche an die zweite Verkleidung (26B) angeschweißt ist.

6. Grätschsitzfahrzeug (10) nach einem der vorhergehenden Ansprüche, wobei das Verbindungselement (58) keine Schraube oder kein anderes verschraubtes Befestigungselement umfasst.

7. Grätschsitzfahrzeug (10) nach Anspruch 2 oder einem davon abhängigen Anspruch, wobei
das Verbindungselement (58) einen Klettverschluss umfasst, wobei eines des ersten oder zweiten Verbindungselements (58A, 58B) eine erhabene Hakenfläche umfasst und das andere des ersten oder zweiten Verbindungselements (58A, 58B) eine erhabene Schlaufenfläche umfasst.

8. Grätschsitzfahrzeug (10) nach einem der vorhergehenden Ansprüche, wobei der Frontteil (20A) des Kraftstoffbehälters (20) ein oberes oder oberstes Blech (40) und mindestens zwei Seitenbleche (42) umfasst.

9. Grätschsitzfahrzeug (10) nach Anspruch 8, wobei der Frontteil (20A) des Kraftstoffbehälters (20) ein Halteelement (38) umfasst, wobei das Halteelement (38) in Draufsicht vor dem oberen oder obersten Blech (40) des Frontteils (20A) positioniert ist oder sich von diesem aus nach vorn erstreckt.

10. Grätschsitzfahrzeug (10) nach Anspruch 9, wobei das Halteelement mindestens ein Aufnahmemittel (44A, 44B) umfasst und die Oberseitenabdeckung (46) einen oder mehrere in dem mindestens einen Aufnahmemittel (44A, 44B) positionierte Vorsprünge (52A, 52B) umfasst.

11. Grätschsitzfahrzeug (10) nach Anspruch 3 oder einem davon abhängigen Anspruch, das mindestens ein Paar Aussparungen (40A) und mindestens ein Paar Verbindungselemente (58) umfasst, wobei die Aussparungen (40A) symmetrisch mit Bezug auf eine Mittelachsenlinie (L1) angeordnet sind, die sich in einer Vorwärts-Rückwärts-Richtung des Kraftstoffbehälters (20) durch einen Mittelpunkt des Kraftstoffbehälters (20) in der Links-Rechts-Richtung erstreckt, und entsprechende Verbindungselemente (58) in entsprechenden Aussparungen (40A) bereitgestellt sind.

12. Grätschsitzfahrzeug (10) nach einem der vorhergehenden Ansprüche, wobei die Oberseitenabdeckung (46) ein oberes Blech (48) und ein Paar Seitenbleche (50) umfasst, die sich abwärts von dem linken und rechten Ende des oberen Blechs (48) erstrecken, und mindestens eines oder beide der Seitenbleche (50) der Oberseitenabdeckung (46) ein Befestigungselement (54) umfassen, das mit einem entsprechenden Befestigungselement (56), das an dem Kraftstoffbehälter (20) geformt ist, in Eingriff steht, um dadurch die Seitenbleche (50) an den Kraftstoffbehälter (20) zu befestigen.

## Revendications

1. Véhicule à enfourcher (10), comprenant :
un réservoir de carburant (20)
une protection supérieure (46) fournie ou s'étendant à l'avant ou vers l'avant du réservoir de carburant (20) et constituée de résine synthétique ; et
un élément de raccordement (58) fourni de manière à raccorder le réservoir de carburant (20) et la protection supérieure (46),
une partie avant (20A) du réservoir de carburant (20) présentant une surface de chevauchement formée vers l'intérieur d'une surface d'une partie du réservoir de carburant (20) positionnée derrière la partie avant (20A) dans une direction verticale et/ou une direction gauche/droite du véhicule,
une partie arrière (46B) de la protection supérieure (46) étant placée sur, à côté ou à proximité de la surface de chevauchement,
l'élément de raccordement (58) se présentant sous forme de feuille ou étant plan et fourni entre la partie avant (20A) du réservoir du carburant (20) et la partie arrière (46B) de la protection supérieure (46) afin de raccorder la partie avant (20A) du réservoir de carburant (20) et la partie arrière (46B) de la protection supérieure (46)
dans lequel la partie arrière (46B) de la protection supérieure (46) chevauche la partie avant (20A) du réservoir de carburant (20), et
**caractérisée en ce que**
le réservoir de carburant (20) est constitué d'aluminium ou d'un alliage d'aluminium et
l'élément de raccordement adhère à la surface de chevauchement.

2. Véhicule à enfourcher (10) selon la revendication 1, dans lequel l'élément de raccordement (58) comprend :
un premier élément de raccordement (58A) fourni au niveau de la partie avant (20A) du réservoir de carburant (20) et se présentant sous forme de feuille ou étant plan ; et
un deuxième élément de raccordement (58B) fourni dans une position opposée au premier élément de raccordement (58A) au niveau de la partie arrière (46B) de la protection supérieure (46) et se présentant sous forme de feuille ou étant plan, et
dans lequel le premier élément de raccordement (58A) et le deuxième élément de raccordement (58B) peuvent être détachés/attachés l'un par rapport à l'autre.

3. Véhicule à enfourcher (10) selon la revendication 1 ou 2, dans lequel la surface de chevauchement présente un renfoncement (40A) qui stocke ou reçoit l'élément de raccordement (58).

4. Véhicule à enfourcher (10) selon l'une quelconque des revendications 1 à 3, dans lequel le réservoir de carburant (20) comprend un premier panneau (26A) comprenant la surface de chevauchement et un deuxième panneau (26B) fourni sous le premier panneau (26A) et soudé au premier panneau (26A),
une extrémité avant du deuxième panneau (26B) est positionnée à l'avant d'une extrémité avant du premier panneau (26A), et
l'extrémité avant du premier panneau (26A) est soudée au deuxième panneau (26B).

5. Véhicule à enfourcher (10) selon la revendication 4, dans lequel l'extrémité avant du premier panneau (26A) est soudée au deuxième panneau (26B) sur un intérieur de la surface de chevauchement.

6. Véhicule à enfourcher (10) selon l'une quelconque des revendications précédentes, dans lequel l'élément de raccordement (58) ne comprend pas un boulon ou un autre élément de fixation fileté.

7. Véhicule à enfourcher (10) selon la revendication 2 ou l'une quelconque des revendications dépendantes de celle-ci, dans lequel
l'élément de raccordement (58) comprend une fixation par boucles et crochets, un parmi les premier ou deuxième éléments de raccordement (58A, 58B) comprend une surface à crochets relevés et l'autre parmi les premier ou deuxième éléments de raccordement (58A, 58B) comprend une surface à boucles relevées.

8. Véhicule à enfourcher (10) selon l'une quelconque des revendications précédentes, dans lequel la partie avant (20A) du réservoir de carburant (20) comprend une feuille supérieure ou la plus supérieure (40) et au moins deux feuilles latérales (42).

9. Véhicule à enfourcher (10) selon la revendication 8, dans lequel la partie avant (20A) du réservoir de carburant (20) comprend un élément de support (38), l'élément de support (38) étant positionné ou s'étendant à l'avant ou vers l'avant de la feuille supérieure ou la plus supérieure (40) de la partie avant (20A) dans une vue en plan.

10. Véhicule à enfourcher (10) selon la revendication 9, dans lequel l'élément de support comprend au moins un moyen de réception (44A, 44B) et la protection supérieure (46) comprend une ou plusieurs saillie(s) (52A, 52B) positionnée(s) dans le au moins un moyen de réception (44A, 44B).

11. Véhicule à enfourcher (10) selon la revendication 3 ou l'une quelconque des revendications dépendantes de celle-ci, comprenant au moins une paire de renfoncements (40A) et au moins une paire d'éléments de raccordement (58), dans lequel les renfoncements (40A) sont agencés de manière symétrique par rapport à une ligne d'axe centrale (L1) qui s'étend dans une direction avant-arrière du réservoir de carburant (20) en passant par un centre du réservoir de carburant (20) dans la direction gauche-droite, et des éléments de raccordement (58) respectifs sont fournis dans des renfoncements (40A) respectifs.

12. Véhicule à enfourcher (10) selon l'une quelconque des revendications précédentes, dans lequel la protection supérieure (46) comprend une feuille supérieure (48) et une paire de feuilles latérales (50) qui s'étendent vers le bas à partir des extrémités gauche et droite de la feuille supérieure (48), et au moins une ou les deux parmi les feuilles latérales (50) de la protection supérieure (46) comprend ou comprennent un élément d'attache (54) en prise avec un élément d'attache (56) correspondant formé au niveau du réservoir de carburant (20) afin de fixer les feuilles latérales (50) sur le réservoir de carburant (20).
